# EUROPEAN PATENT SPECIFICATION

(11) **EP 3 918 113 B1**
(45) Date of publication and mention of the grant of the patent: **26.07.2023**
(21) Application number: 20704207.8
(22) Date of filing: 30.01.2020
(51) Int. Cl.: C25C 3/06, C01F 7/60, C25C 3/22, C25B 1/00

(54) **A PROCESS FOR PRODUCTION OF ALUMINIUM**
VERFAHREN ZUR HERSTELLUNG VON ALUMINIUM
PROCÉDÉ DE PRODUCTION D'ALUMINIUM

(30) Priority: 31.01.2019 NO 20190144
(43) Date of publication of application: 08.12.2021
(73) Proprietor: Norsk Hydro ASA, 0240 Oslo (NO)
(72) Inventor: ROSENKILDE, Christian, 3911 Porsgrunn (NO)
(74) Representative: Hydro IPD
(86) International application number: PCT/EP2020/052304
(87) International publication number: WO 2020/157205

(56) References cited:
- CN-A- 102 502 665
- US-A- 4 434 149
- US-A- 4 437 887
- US-A- 4 576 690
- US-A1- 2002 070 122

## Description

This invention describes a method for production of aluminium with near zero net CO₂ emissions. More specific, the aluminium is to be produced by electrolysis of aluminium trichloride, AlCl₃. Production of this AlCl₃ and recycling of the carbon used in the production of the AlCl₃ is included in the production method. The carbon recycling ensures near zero net CO₂ emissions.

The sole commercial process for aluminium production is the so-called Hall-Héroult process, named after its inventors. In this process smelter grade alumina (Al₂O₃) is dissolved in a molten fluoride electrolyte and electrolyzed using carbon anodes. The anode product is CO₂, where the oxygen comes from the dissolved alumina and the carbon from the carbon anode itself. The net reaction for the Hall-Héroult process is Al₂O₃ + 1.5C = 2AI + 1.5 CO₂.

It is well known in the prior art that it is also possible to produce aluminium according to the so-called Alcoa chloride process. In this process smelter grade alumina is coked (US3811916). The coked alumina is then undergoing chlorination according to the reaction Al₂O₃(s) + 3Cl₂(g) +1.5C(s) = 2AlCl₃(g) + 1.5CO₂(g) (US4083928) followed by separation of CO₂ and AlCl₃ by cooling and condensation of the AlCl₃ (US4070488). The AlCl₃ thus produced is fed to an electrolysis cell where the AlCl₃ dissolves in a molten chloride melt. Aluminium metal is formed on the cathode and chlorine gas on the anode: AlCl₃ = Al(l) + 1.5Cl₂(g) The chlorine is recycled to the chlorination step and the metal extracted for further treatment and casting. The net reaction for the process is Al₂O₃ + 1.5C = 2AI + 1.5CO₂, the same as for the Hall-Héroult process. The CO₂ emission for both processes is about 1.5 kg CO₂ for each kg of Al produced. Although developed to industrial scale, the chloride process was never applied for commercial production of aluminium.

US2002/070122, CN102502665 and US4576690 also disclose methods for production of aluminium by electrolysis of AlCl₃, which is produced by means of a chlorination process wherein an aluminium oxide bearing material is treated by chlorine and solid carbon material as reductant.

It is also known that it is possible to perform the chlorination of alumina using gaseous CO instead of carbon: Al₂O₃(s) + 3Cl₂(g) +3CO(g)= 2AlCl₃(g) + 3CO₂(g), (see e.g. US4434149 and US4437887). It is reported that this reaction is faster than when using carbon (e.g. US4957722). If the CO used for the chlorination comes from carbon sources outside the process, e.g. by partial oxidation of carbon or natural gas, the CO based chlorination leads to two times larger CO₂ emissions than the carbon-based chlorination. To achieve the goal of this invention, i.e. near zero net CO₂ emissions, it is therefore important to minimize the use of fossil carbon sources for the CO gas.

Direct electrochemical conversion of CO₂ to CO and oxygen has been described in the scientific literature for over a century (see e.g. Jitaru et al, J. Appl. Electrochem., Vol 27, p. 875, 1997 and references therein). During the last decades, the technology has gained renewed scientific and commercial interest. The basic principle is that CO₂ is reduced on a cathode to CO, e.g.: CO₂ + 2e + H₂O = CO + 2OH⁻ in aqueous electrolytes or CO₂ + 2e = CO + O²⁻ in a solid oxide electrolyte. On the anode, there is an oxidation reaction typically leading to formation of oxygen giving the net reaction CO₂ = CO + 0.5O₂. Electrolyzers based on modern water electrolyzers can now effectively convert CO₂ to CO and oxygen (see e.g. US20180023198A1). The energy input is electricity.

According to the present invention a CO₂ to CO reduction step is integrated with the production of AlCl₃. The CO₂ produced during the chlorination of alumina (Al₂O₃(s) + 3Cl₂(g) +3CO(g)= 2AlCl₃(g) + 3CO₂(g)) shall be reduced to CO. The CO thus produced is fed to the chlorination together with alumina and chlorine. This integration ensures internal recycling of carbon in the process, thereby nearly eliminating CO₂ emissions. CO₂ can be reduced to CO either electrochemically or by use of a non-carbonaceous reductant. Direct electrochemical reduction, CO₂ = CO + 0.5O₂, where CO is produced on the cathode and oxygen is produced on the anode, is shown above. Another example is hydrogen reduction of CO₂: CO₂ + H₂ = CO + H₂O, the so-called reverse water gas shift reaction. To ensure close to zero CO₂ emissions, the electricity and hydrogen used for CO₂ reduction should come from non-CO₂ emitting sources. Examples are electricity produced by from renewable wind, solar or hydro power, and hydrogen produced by water electrolysis using the same sources for the electricity.

It is also possible to use hydrocarbons to reduce the CO₂. There will then be CO₂ emissions, but smaller than from the present state-of-the-art, the Hall-Héroult process.

These and further steps can be achieved by the invention according to the accompanying claims.

According to one aspect of the invention, there is described a novel process for production of aluminium (Al) by electrolysis of aluminium chloride (AlCl₃), wherein the aluminium chloride (AlCl₃) is produced from an aluminium oxide (Al₂O₃) containing feedstock by reaction with carbon monoxide (CO) and chlorine (Cl₂), and where carbon dioxide (CO₂) formed in this reaction is subsequently reduced to carbon monoxide (CO) either electrochemically or by use of a non-carbonaceous reductant, wherein the said carbon monoxide (CO) is recycled to the aluminium chloride (AlCl₃) production and wherein the electrolysis of the aluminium chloride (AlCl₃) forms aluminium metal (Al) and chlorine (Cl₂), and where this chlorine (Cl₂) is recycled to the aluminium chloride (AlCl₃) production.

According to other aspects of the invention, the CO₂ is reduced by electrolysis, or in reaction with hydrogen.

The invention will be further explained by example and Figure as follows;

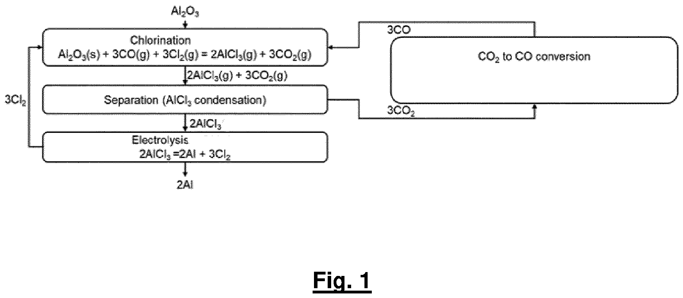

Fig. 1 discloses a simplified process diagram of the process steps in one embodiment of the invention.

The various steps in the overall process is described by the following chemical reactions:

| | |
|---|---|
| **1.** Al₂O₃(s) + 3Cl₂(g) +3CO(g)= 2AlCl₃(g) + 3CO₂(g) | Chlorination. CO from step 2a or 2b, Cl₂ from 3 |
| **2a.** 3CO₂ = 3CO + 1.5O₂ | Electrochemical CO₂ reduction |
| **2b.** 3CO₂+ 3H₂ = 3CO + 3H₂O | CO₂ reduction by hydrogen |
| **3.** 2AlCl₃ = 2AI + 3Cl₂ | Electrolysis of AlCl₃ |
| **Net.** Al₂O₃ = 2AI + 1.5O₂ (2a) or Al₂O₃ + 3H₂ = 2AI + 3H₂O (2b) | |

The process steps above are shown schematically in a simplified process flow diagram, Fig 1. A description of the main steps and some alternative embodiments thereof in the process are given in the following.

### Alumina chlorination:

In this step reaction 1 is taking place. Here alumina, chlorine and carbon monoxide are brought together in a suitable chlorination reactor. The alumina is preferably fed as powder or particles. A suitable reactor is a fluidized bed reactor. The operating temperature can be around 700°C. The conversion of the reactants to AlCl₃ and CO₂ is close to 100%, but there will be traces of unreacted alumina, chlorine and CO as well as other reaction products.

### Chlorination off-gas treatment:

The off-gas from the chlorination is not only AlCl₃ and CO₂. There will also be unreacted alumina dust, CO and Cl₂, as well as products from impurities in the unreacted alumina dust, chlorine and CO. There may also be traces of reactor materials. To ensure high quality AlCl₃ feed to the electrolysis cell, the off-gas components must be separated. The alumina dust can be separated by a cyclone or filter. Some of the chlorinated impurities from the alumina, such as sodium and calcium, are much less volatile than the aluminium chloride. Due to some hydrogen content in the alumina, there will also be formation of HCl gas. By cooling the off-gas to a temperature above the condensation point of the AlCl₃ (>180°C), several of the off-gas impurities will condensate, allowing for removal by e.g. filtration. After these initial separation steps, the off-gas is mainly AlCl₃ and gases with a lower condensation temperature, including CO₂. The AlCl₃ can therefore be condensed to a nearly pure solid by further cooling to a temperature somewhat below the condensation point. The reactor for this condensation must be able to extract all the heat released during the AlCl₃ condensation and allow for removal of the condensed material without contact with ambient atmosphere. AlCl₃ hydrolyses immediately when contacted with moisture.

A suitable reactor can be one where the gas is led into a bed of fluidized AlCl₃ particles. The bed is internally cooled, and the fluidization gas is some of the CO₂ that has left the fluidized bed reactor. The gaseous AlCl₃ entering the reactor condenses on the fluidized AlCl₃ particles. Particles are removed from the reactor. Undersized particles are returned to the reactor to allow for further growth. The remaining particles are handled and stored in a dry atmosphere until they are fed to the electrolysis cells.

The gaseous species remaining after AlCl₃ condensation, mainly CO₂, must be treated further before the CO₂ can be reduced to CO. Standard gas treatment technologies such as filters and scrubbers are sufficient. The final off-gas is CO₂ suitable as feed for the CO₂ reduction step.

### CO production from CO₂:

CO₂ can be reduced to CO in several ways. The reduction is quite energy intensive, with a theoretical minimum requirement at 25°C of 1.8 kWh per kg CO₂ reduced. In view of the purpose of the invention described here, i.e. to minimize CO₂ emissions from fossil sources during aluminium production, the reduction method should preferably not involve the consumption of fossil carbon-based materials, neither as chemicals nor sources of energy. Preferred methods are the electrochemical (reaction 2a) and the hydrogen reduction routes (reaction 2b), which allow for use of electricity produced from renewable sources as the main energy input.

Direct electrochemical conversion of CO₂ to CO and oxygen can be applied. The basic principle is that CO₂ is reduced on a cathode to CO, e.g.: CO₂ + 2e + H₂O = CO + 2OH⁻. On the anode, the hydroxide is oxidized: 2OH⁻ = 0.5O₂ + H₂O + 2e. The net reaction is CO₂ = CO + 0.5O₂. Electrolyzers based on modern water electrolyzers can now effectively convert CO₂ to CO and oxygen where the energy input is electricity.

Hydrogen reduction of CO₂ may also be one alternative. The reverse water gas shift reaction, CO₂ + H₂ = CO + H₂O, is one example. The reaction is mildly endothermic and CO₂ conversion is favoured at high temperatures. The reaction is not completely shifted to the right, so the CO must be separated from the other gases, e.g. by membranes, before use in the chlorination step. The hydrogen required can be produced by water electrolysis using renewable electricity.

Hydrocarbons can also be used to reduce the CO₂. However, not without CO₂ emissions, but with significant reduction compared to the state-of-the-art Hall-Héroult process. An example is reduction by methane: 3CO₂ + 0.75CH₄ = 3CO + 0.75CO₂ + 1.5H₂O. The carbon from the methane is let out of the process as CO₂. The net reaction for the full process, starting from alumina and natural gas, will be Al₂O₃ + 0.75CH₄ = 2AI + 0.75 CO₂ + 1.5H₂O, i.e. half the CO₂ emissions compared to the Hall-Héroult net reaction.

### AlCl₃ electrolysis:

The aluminium metal is produced in an electrolysis cell. The main principle is that the aluminium chloride is added to an electrolyte consisting of a mixture of molten non-aqueous alkali and alkali earth chlorides. The operating temperature of the cell is above the melting point of aluminium, 660°C. It is possible to use graphite as anode and cathode. On the cathode, AlCl₃ is reduced to liquid aluminium metal: AlCl₃ + 3e = Al(l) + 3Cl⁻. On the anode, the chloride in the molten electrolyte is oxidized to chlorine gas: 3Cl⁻ = 1.5 Cl₂(g) + 3e. The net reaction is AlCl₃ = Al(l) + 1.5 Cl₂(g). To minimize the energy consumption during electrolysis, a bi-polar electrode configuration can be advantageous. The liquid aluminium is extracted from the cell at regular intervals and cast to suitable products. The chlorine is treated to remove volatile electrolyte components and then transferred to the alumina chlorination step. The volatile electrolyte components are completely or partially returned to the electrolysis cell.

## Claims

1. A process for production of aluminium (Al) by electrolysis of aluminium chloride (AlCl₃), wherein the aluminium chloride (AlCl₃) is produced from an aluminium oxide (Al₂O₃) containing feedstock by reaction with carbon monoxide (CO) and chlorine (Cl₂), and where carbon dioxide (CO₂) formed in this reaction is reduced to carbon monoxide (CO), either electrochemically or by use of a non-carbonaceous reductant, wherein the said carbon monoxide (CO) is recycled to the aluminium chloride (AlCl₃) production and wherein the electrolysis of the aluminium chloride (AlCl₃) forms aluminium metal (Al) and chlorine (Cl₂), and where this chlorine (Cl₂) is recycled to the aluminium chloride (AlCl₃) production.

2. A process according to claim 1 wherein,
the aluminium oxide feedstock contains more than 95% Al₂O₃.

3. A process according to claim 1 wherein,
the aluminium oxide feedstock is produced by the Bayer process.

4. A process according to claim 1 wherein,
the aluminium oxide feedstock is a naturally occurring mineral such as clay, other aluminosilicates or bauxite.

5. A process according to claim 1 wherein,
the CO₂ reduction is done by electrolysis of CO₂.

6. A process according to claim 1 wherein,
the CO₂ reduction is done by reaction with hydrogen.

7. A process according to claim 5 wherein,
The cathodic product is more than 50% CO and the anodic product is more than 50% oxygen

## Patentansprüche

1. Verfahren zur Herstellung von Aluminium (Al) durch Elektrolyse von Aluminiumchlorid (AlCl₃), wobei das Aluminiumchlorid (AlCl₃) aus einem Ausgangsmaterial, das Aluminiumoxid (Al₂O₃) enthält, durch Reaktion mit Kohlenstoffmonoxid (CO) und Chlor (Cl₂) hergestellt wird und wobei Kohlenstoffdioxid (CO₂), das in dieser Reaktion gebildet wird, entweder elektrochemisch oder durch Benutzung eines nicht kohlenstoffhaltigen Reduktionsmittels zu Kohlenstoffmonoxid (CO) reduziert wird, wobei das Kohlenstoffmonoxid (CO) in die Herstellung von Aluminiumchlorid (AlCl₃) zurückgeführt wird und wobei bei der Elektrolyse des Aluminiumchlorids (AlCl₃) Aluminiummetall (Al) und Chlor (Cl₂) gebildet werden und wobei das Chlor (Cl₂) in die Herstellung des Aluminiumchlorids (AlCl₃) zurückgeführt wird.

2. Verfahren nach Anspruch 1, wobei
das Aluminiumoxid-Ausgangsmaterial mehr als 95 % Al₂O₃ enthält.

3. Verfahren nach Anspruch 1, wobei
das Aluminiumoxid-Ausgangsmaterial nach dem Bayer-Verfahren hergestellt wird.

4. Verfahren nach Anspruch 1, wobei
das Aluminiumoxid-Ausgangsmaterial natürlich vorkommendes Mineral, wie z.B. Ton, andere Aluminiumsilikate oder Bauxit, ist.

5. Verfahren nach Anspruch 1, wobei
die CO₂-Reduktion durch Elektrolyse von CO₂ durchgeführt wird.

6. Verfahren nach Anspruch 1, wobei
die CO₂-Reduktion durch Reaktion mit Wasserstoff durchgeführt wird.

7. Verfahren nach Anspruch 5, wobei
das Kathodenprodukt zu mehr als 50 % CO ist und das Anodenprodukt zu mehr als 50 % Sauerstoff ist.

## Revendications

1. Procédé de production d'aluminium (Al) par électrolyse du chlorure d'aluminium (AlCl₃), dans lequel le chlorure d'aluminium (AlCl₃) est produit à partir d'une charge contenant de l'oxyde d'aluminium (Al₂O₃) par réaction avec du monoxyde de carbone (CO) et du chlore (Cl₂), et dans lequel le dioxyde de carbone (CO₂) formé dans cette réaction est réduit en monoxyde de carbone (CO), soit par voie électrochimique, soit par l'utilisation d'un réducteur non carboné, dans lequel ledit monoxyde de carbone (CO) est recyclé dans la production de chlorure d'aluminium (AlCl₃) et dans lequel l'électrolyse du chlorure d'aluminium (AlCl₃) forme de l'aluminium métallique (Al) et du chlore (Cl₂), et dans lequel ce chlore (Cl₂) est recyclé dans la production de chlorure d'aluminium (AlCl₃).

2. Procédé selon la revendication 1, dans lequel
la charge d'oxyde d'aluminium contient plus de 95 % d'Al₂O₃.

3. Procédé selon la revendication 1, dans lequel
la matière première d'oxyde d'aluminium est produite par le procédé Bayer.

4. Procédé selon la revendication 1, dans lequel
la charge d'oxyde d'aluminium est un minéral naturel tel que l'argile, d'autres aluminosilicates ou la bauxite.

5. Procédé selon la revendication 1 dans lequel la réduction du CO₂ est effectuée par électrolyse du CO₂.

6. Procédé selon la revendication 1 dans lequel
la réduction du CO₂ est effectuée par réaction avec l'hydrogène.

7. Procédé selon la revendication 5, dans lequel
le produit cathodique est composé à plus de 50 % de CO et le produit anodique est composé à plus de 50 % d'oxygène.
